# EUROPÄISCHE PATENTSCHRIFT

(11) **EP 0 249 921 B1**
(45) Veröffentlichungstag und Bekanntmachung des Hinweises auf die Patenterteilung: **13.01.1993**
(21) Anmeldenummer: 87108603.9
(22) Anmeldetag: 15.06.1987
(51) Int. Cl.: B01D 39/14, E02B 11/00, B09B 1/00

(54) **Dränmatte mit hoher Druckbeständigkeit und Deponieboden mit dieser Matte**
Drainage mat with high resistance to pressure and ground of deposition by this mat
Natte de drainage d'une grande résistance à la pression et terrain de dépôt avec cette natte

(30) Priorität: 18.06.1986 DE 3620388
(43) Veröffentlichungstag der Anmeldung: 23.12.1987
(73) Patentinhaber: AKZO N.V., NL-6824 BM Arnhem (NL)
(72) Erfinder: Berkhout, Henny, NL-6825 EV Arnheim (NL)
(74) Vertreter: Fett, Günter

(56) Entgegenhaltungen:
- EP-A- 0 069 323
- EP-A- 0 071 212
- EP-A- 0 146 190
- DE-A- 2 027 724
- DE-A- 2 248 911
- DE-A- 2 327 618
- DE-A- 2 551 267
- DE-A- 2 720 403
- DE-A- 3 435 983
- DE-C- 2 530 499

## Beschreibung

Gegenstand der vorliegenden Erfindung ist eine Dränmatte mit hoher Druckbeständigkeit, bestehend aus zwei Flächengebilden und zwischen diesen Flächengebilden ortsfest angeordneten Körnern, sowie ein Deponieboden, welcher derartige Dränmatten enthält.

Derartige Dränmatten sind vielfach bekannt (siehe DE-A-22 48 911, DE-A-22 63 896, DE-A-23 27 618, DE-A-25 51 267). In diesen bekannten Dranmatten sind die Körner mehrschichtig und einander berührend angeordnet. Durch diese Packungsart ergibt sich für diese bekannten Dränmatten eine geringe Wasserabführleistung, so daß diese Dränmatten dick sind, wenn die Wasserabführleistung gesteigert werden soll. Hierdurch wird das Quadratmetergewicht solcher Dränmatten sehr groß. Die Körner können nur durch die beiden Flächengebilde festgehalten sein, wodurch sich bei Druckbelastung eine Verschiebung der Körner untereinander und somit eine Reibbelastung der Flächengebilde ergibt. Ein Aufreißen der Flächengebilde kann häufig nicht vermieden werden. In anderen Fällen sind die Körner durch Hindurchnadeln von Fasern aus den beiden Flächengebilden oder durch Aufsprühen von Bindemitteln ortsfest festgelegt. Solche Dränmatten sind sehr aufwendig herzustellen. Der Freiraum für die Wasserabfuhr wird durch die hindurchgenadelten Fasern bzw. durch das Bindemittel weiter reduziert. Bei derartigen Dränmatten ist das eine Flächengebilde grundsätzlich eine Filterschicht, beispielsweise ein Fadengelege oder Vlies, während das andere Flächengebilde eine Filterschicht oder eine dichte Bahn, beispielsweise eine Folie, sein kann.

Aufgabe der vorliegenden Erfindung ist es, eine Dränmatte und einen Deponieboden der eingangs gennanten Art zur Verfügung zu stellen, die(der) auch bei sehr hoher Druckbelastung, höchstens geringfügig zusammengepreßt wird, und welche(r) eine besonders gute Dränagewirkung bzw. besonders hohe Wasserabführleistung aufweist.

Diese Aufgabe wird bei einer gattungsgemäßen Dränmatte dadurch gelöst, daß die Körner einschichtig angeordnet sind und einen Abstand von wenigstens 50% der mittleren Korngröße voneinander aufweisen.

Der Begriff Körner umfaßt praktisch alle körnerförmigen Produkte wie beispielsweise Kugeln, Kieselsteine, Granulate. Diese Körner müssen nicht unbedingt kompakt sein und/oder nur aus einem Material bestehen. Sie können auch als Hohlkörper ausgebildet sein. Körper, wie sie zum Beispiel zum Erhöhen der Benetzungsoberfläche bei Luftwäschern oder Luftbefeuchtern eingesetzt werden, wie beispielsweise die sogenannten Raschigringe, fallen ebenfalls im Sinne dieser Erfindung unter den Begriff Körner. Als Material für die Körner eignen sich bevorzugt Mineralstoffe, Kunststoffe oder Kunststoffschäume.

Es versteht sich von selbst, daß die Körner mindestens einen Berstdruck aufweisen müssen, welcher größer ist als der Flächendruck, der an der Einsatzstelle der Dränmatte herrscht. Beispielsweise sollen die Körner in der Anordnung,wie sie in der Dränmatte zu liegen kommen, einem Flächendruck von mehr als 8 bar, vorzugsweise mehr als 10 bar standhalten, also nicht bersten, wenn diese körner für eine Dränmatte geeignet sein sollen, die für ihr spezielles Einsatzgebiet eine Druckbeständigkeit von 8 bar aufweisen soll.

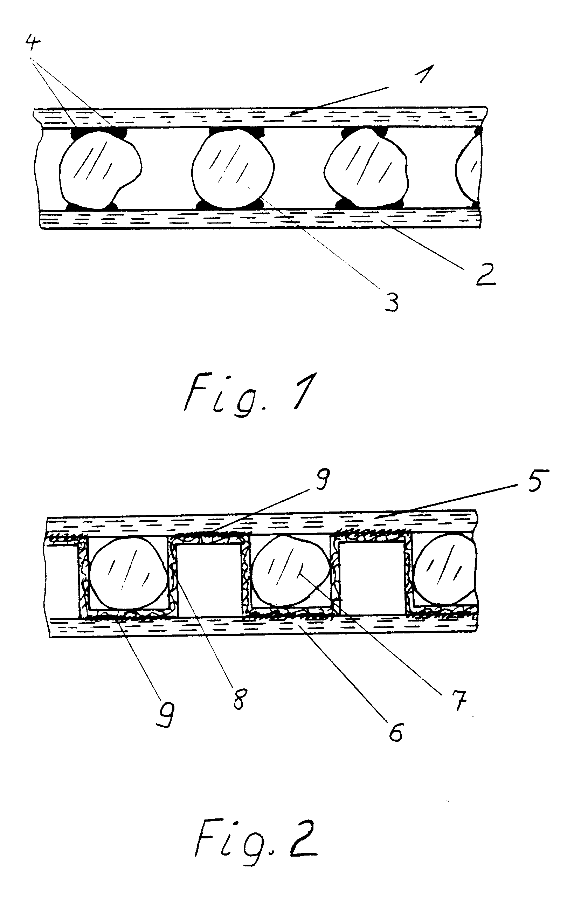

Die Körner sind in der Dränmatte dann ortsfest angeordnet, wenn sie zumindest in etwa in ihrer Lage festgelegt sind. Sie können mit dem Flächengebilde verklebt sein. Sie können auch durch andere Weise auf Abstand gehalten werden. Beispielsweise können die Körner durch eine Lochplatte auf Abstand gehalten werden, wobei die Löcher der Lochplatte größer sein können als die Körner. Die Lochplatte kann als Produktionshilfsmittel dienen, um beispielsweise eine Dränmatte herzustellen, die lediglich Körner und Flächengebilde aufweist (Figur 1). Sie kann jedoch auch in der Dränmatte angeordnet sein, wenn sie als dreidimensionales Flächengebilde ausgebildet ist (Lochplatte entsprechender Dicke, profilierte Lochplatte, Lochplatte mit Stegen entsprechender Dicke). Die Körner sind dann zwar in ihrer Lage festgelegt, könne sich aber um kleine Beträge um diese Lage herum bewegen.

Die Flächengebilde sollen vom Modul her so beschaffen sein, daß diese im Belastungsfall zwischen den Körnern möglichst wenig durchhängen. Als dichte Flächengebilde kommen hauptsächlich Folien infrage, die im Regelfalle eine Dicke von 0,1 bis 2 mm aufweisen. Als Filterschichten eignen sich praktisch alle Flächengebilde, wie Vliese, Gewebe oder Gelege, die die Eigenschaft haben, daß einerseits Wasser praktisch ungehindert durchfließen kann, daß andererseits aber sowohl die Körner im Inneren der Matte festgehalten werden, aber auch Feststoffe nicht in die Matte eindringen können. Sie weisen vorzugsweise eine Dicke von 0,7 bis 8 mm auf.
Es kommen aber auch Filterschichten mit geringerer Zugfestigkeit infrage, sofern diese mit entsprechenden zugfesten Verstärkungsgelegen, wie beispielsweise Gittergewebe verstärkt sind.

Die erfindungsgemäßen Dränmatten lassen sich auf einfache Weise dadurch herstellen, daß zunächst auf das eine Flächengebilde punktweise ein Kleber, beispielsweise unter Zuhilfenahme einer Walze mit in regelmäßigen Abständen aufweisenden Höckern, aufgetragen, und dann die Körner aufgerakelt werden. Nachdem der Kleber abgebunden hat bzw. ausgehärtet ist, können die nicht mit dem Flächengebilde verklebten Körner dadurch wieder entfernt werden, daß nunmehr das Flächengebilde mit den Körnern nach unten weitertransportiert wird. Auf die mit dem ersten Flächengebilde verbundenen Körner wird beispielsweise mit einer Beschichtungswalze auf die dem ersten Flächengebilde abgewandte Körnerseite wiederum Kleber aufgetragen, und das zweite Flächengebilde aufgepreßt.

Die Dränmatte weist dann eine genügend gleichmäßige Dicke auf, wenn die Querschnittsabmessungen der Körner untereinander möglichst gleichmäßig sind. Dies führt auch zu einer gleichmäßigen Belastung der Flächengebilde.

Bei erfindungsgemäßen Dränmatten hat es sich als vorteilhaft herausgestellt, wenn die Körner vor ihrem Einbau in die Dränmatte durch Sieben klassiert wurden. Beim Sieben durch Klassieren werden durch Sieben mit einem Sieb mit größerer Massenweite zunächst alle groben Körner abgetrennt und dann durch ein Sieb mit geringerer Maschenweite die feinen Körner entfernt. Die Korngröße dieser Körner ist beim Sieben durch Angabe der Maschenweite der beiden, zum Klassieren verwendeten Siebe definiert. Weist beispielsweise das erste Sieb eine Maschenweite von 11 mm und das zweite Sieb eine Maschenweite von 9 mm auf, so wird die Korngröße mit 9 - 11 angegeben.

Bei den erfindungsgemäßen Dränmatten ist es nun von Vorteil, wenn diese Körner enthalten, die durch Sieben mittels runde oder quadratische Öffnungen aufweisenden Siebböden derart klassiert sind, daß die Differenz zwischen der kleinsten und der größten Korngröße maximal 3 mm, vorzugsweise maximal 2 mm beträgt. Beträgt beispielsweise die Differenz zwischen der kleinsten und der größten Korngröße 2 mm, werden also Körner der Korngröße von beispielsweise 9 - 11, 24 - 26 oder 29 - 31 für die Herstellung erfindungsgemäßer Dränmatten verwendet, bzw.sind die Körner durch zwei Siebe, deren Maschenweiten 2 mm auseinanderliegen, beispielsweise 1. Sieb 11 mm und 2. Sieb 9 mm Maschenweite (bzw. 1. Sieb 26 mm und 2. Sieb 24 mm, bzw. 1. Sieb 31 mm und 2. Sieb 29 mm Maschenweite) klassiert worden. Als Siebböden kommen hierbei Lochbleche oder Siebgewebe mit runden oder quadratischen Öffnungen infrage.

Die erfindungsgemäße Dränmatte kann dann besonders einfach hergestellt werden, wenn zwischen den beiden Flächengebilden eine dreidimensionale Matte mit Positionierungsplätzen für die Körner angeordnet ist, wobei die Matte mit mindestens einem Flächengebilde zumindest punktweise verbunden ist.

Dreidimensionale Matten im Sinne der Erfinding können sein: profilierte Folien oder Platten, die bevorzugt eine Wabenstruktur aufweisen; Gelege aus Polymerdrähten, Metalldrähten oder Seilen, deren Strukturdicke mehr als 60% der Korngröße der Körner entspricht; zu wabenstrukturähnlichen Gebilden geformte Gelege u.s.w.

Als besonders günstig hat sich eine Dränmatte herausgestellt, bei der die dreidimensionale Matte aus einer Vielzahl aus synthetischen Polymeren schmelzgesponnen, sich stellenweise überkreuzenden und an den Kreuzungsstellen miteinander verschweißten Fäden mit einem Durchmesser von 0,2 bis 1,5 mm besteht, eine Dicke von 5 bis 70 mm aufweist, und eine waffelähnlich strukturierte Oberfläche mit Vertiefungen besitzt, wobei die Vertiefungen der strukturierten Oberfläche Positionierungsplätze für die Körner sind.

Im Rahmen dieser Erfindung wird das zwischen den Flächengebilden angeordnete Gebilde als "Matte", das Gebilde, das aus Körnern, Flächengebilden und gegebenenfalls aus einer Matte aufgebaut ist zur Unterscheidung als "Dränmatte" bezeichnet.

Eine oben beschriebene Matte ist beispielsweise aus dem DE-C-27 20 403 in Zusammenhang mit DE-C-25 30 499 bekannt geworden. Die bekannten Matten dienen dort als Dränageschicht, die mit mindestens einer Filterschicht verbunden ist. Dränmatten, die eine solche Matte enthalten, weisen den Nachteil auf, daß sie bei hoher Flächendruckbelastung an Volumen verlieren, wodurch die Wasserabführleitung solcher Dränmatten verringert wird. Die Matten weisen eine strukturierte Oberfläche auf, die aus in der Regel gleichmäßig verteilten Erhebungen und Vertiefungen bestehen. In diese Vertiefungen lassen sich besonders güngstig Körner einrakeln, so daß dann die Körner in einem durch die Vertiefungen festgelegten Abstand voneinander zu liegen kommen. Die Matte ist zumindest auf der einen Seite mit dem Flächengebilde verbunden, während das andere Flächengebilde mit den Körnern und/oder mit der Matte verbunden ist.

In der Regel genügt est, wenn die Dicke der Matte bei 60 bis 100% der mittleren Korngröße liegt. Die Körner sind dann mit dem ersten Flächengebilde und/oder der Matte und mit dem zweiten Flächengebilde und die Matte mit dem ersten Flächengebilde verbunden. Hierbei dient die Matte hauptsächlich dazu, bei der Herstellung der Dränmatte eine gleichmäßige Kornverteilung zu gewährleisten.

Hier hat es sich besonders bewährt, wenn zunächst die Matte mit dem einen Flächengebilde verbunden wird. Die Körner können dann, beispielsweise in einer Mischmaschine, mit einem Binder vermischt werden, so daß die Körner allseitig mit Binder beschichtet sind. Die mit Binder beschichteten Körner können dann auf die freie, strukturierte Oberfläche der Matte (auf die dem einen Flächengebilde entgegengesetzte Seite) aufgerakelt werden. Anschließend kann das zweite Flächengebilde aufgelegt werden, so daß die Körner einerseits mit der Matte und andererseits mit dem zweiten Flächengebilde nach dem Abbinden des Binders verbunden sind.

Werden Körner verwendet, die mit den Flächengebilden nur unter erhöhtem Aufwand bzw. nicht mit der nötigen Sicherheit mit den Flächengebilden verbunden werden können, ist es besonders günstig, eine Dränmatte zur Verfügung zu stellen, bei welcher die Matte mit beiden Flächengebilden verbunden ist und die Korngröße der Körner bei 80 bis 105% der Dicke der Matte liegt. Hierbei wird die Kornverteilung wiederum durch die Matte gewährleistet. Die Körner sind dann in den von der Matte und dem Flächengebilde gebildeten Hohlräumen ortsfest festgelegt und weder mit der Matte noch mit dem Flächengebilde verbunden. Eine solche Matte eignet sich besonders dann, wenn poröse Körner oder Körner mit bis in die Oberfläche der Körner sich erstreckenden Hohlräumen eingesetzt werden. Die Poren bzw. Hohlräume der Körne sind dann in der Dränmatte nicht durch Kleber oder Bindemittel verschlossen. Bei Verwendung von Körnern mit durchgehenden Hohlräumen kann dann die Wasserabfuhrleistung der Dränmatte noch erhöht werden.

Filterschichten können günstigerweise aus einem Spinnvlies bestehen, wobei dann günstigerweise diese Spinnvliese mit den Erhebungen der Matte verschweißt sind.

Die Durchmesser der Fäden eines solchen Spinnvlieses können in weiten Grenzen schwanken und insbesondere auch wesentlich kleiner sein als die der Fäden der Matte. Vorzugsweise weisen die Fäden des Spinnvlieses aber etwa den gleichen Durchmesser auf wie die Fäden der Matte. Die Dicke des Spinnvlieses soll günstigerweise zwischen etwa o,5 und 4 mm liegen, während die Dicke der Matte bevorzugt zwischen 8 und 30 mm liegt. Höhere Werte führen zu einer nicht gewünschten Erhöhung des Flächengewichts. Bei höheren Werten des Spinnvlieses wird das dickenbezogene Flächengewicht und/oder die flächengewichtsbezogene Festigkeit in Längs- und Querrichtung der Dränmatte verringert.

Das Spinnvlies kann aus dem gleichen Polymeren bestehen wie die Matte. Durch geeignete Auswahl auch unterschiedlicher Polymere für Matte und Spinnvlies lassen sich die Schweißstellenfestigkeit und die Festigkeit in Längs- und Querrichtung der Dränmatte beeinflussen.

Für die Herstellung der Filterschichten und der Matte eignen sich bevorzugt praktisch alle gängigen schmelzspinnbaren Polymeren, wie beispielsweise Polyolefine, vorzugsweise Polyäthylen oder Polypropylen, Polyamide, vorzugsweise Polycaprolactam, Polyester, vorzugsweise Polyäthylenterephthalate, Polyvinylchlorid oder Polycarbonat. Die Polymere können durch Zusätze von Stabilisatoren oder dergleichen in an sich bekannter Weise modifiziert sein.

Als Körner können Kies, Bims, Blähton oder Glas verwendet werden. In der Regel sind solche Körner zu bevorzugen, die ein möglichst geringes spezifisches Gewicht, wie beispielsweise Blähton oder Hohlkörper aus Kunststoff, aufweisen. Hierdurch wird das Flächengewicht der Dränmatte gering gehalten.

Die erfindungsgemäßen Dränmatten eignen sich besonders zu Einsatzzwecken, bei denen bei einer hohen Flächenbelastung von beispielsweise 2 bis 8 bar eine gute Dränagewirkung gewährleistet sein muß. Die Dränmatten eignen sich daher besonders zu Dränagezwecken im Tunnelbau, im Hoch- und Tiefbau, beispielsweise beim Anlegen von Deponien o.ä.
Die Körner der Dränmatte sind bevorzugt porös. Speziell dann, wenn die Körner mit dem Flächengebilde oder mit der Matte verbunden werden sollen, sind poröse Körner besonders günstig, weil dann der Binder oder Kleber in die Poren der Körner eindringen kann, so daß sich besonders feste Verbindungen ergeben.

Die erfindungsgemäß gestellte Aufgabe wird auch gelöst durch einen Deponieboden, welcher die erfindungsgemäße Dränmatte als Basisdränageschicht, Leckagekontrollschicht und/oder kapillarbrechende Schicht enthält.

Im Sinne der vorliegenden Erfindung ist als Deponieboden der Teil einer Deponie zu verstehen, der zur Abtrennung des natürlichen Erdbodens vom Deponiegut eingesetzt wird.

Als besonders vorteilhaft hat es sich hierbei herausgestellt, wenn der Deponieboden aus drei übereinandergeschichteten Dränagematten gemäß der Erfindung besteht, wobei außenliegende Flächengebilde als Filterschicht und innenliegende Flächengebilde als Abdichtungsbahn ausgebildet sind. Dabei genügt es zwischen den Matten jeweils nur eine Abdichtungsbahn vorzusehen. Alle drei Dränagematten können miteinander verbunden sein, so daß der Deponieboden in einem einzigen Arbeitsgang verlegt werden kann.

Die Erfindung wird anhand der nachfolgenden Figuren näher erläutert.

Es zeigen:
- Figur 1: den schematischen Querschnitt durch eine Dränmatte mit zwei Filterschichten und Körnern,
- Figur 2: den schematischen Querschnitt durch eine Dränmatte mit zwei Filterschichten, die mit einer dazwischenliegenden Matte verbunden ist,
- Figur 3: den schematischen Querschnitt durch eine Dränmatte mit zwei Filterschichten und einer weiteren Ausbildung der dazwischenliegenden Matte, wobei die Filterschichten mit der Matte verbunden sind,
- Figur 4: den schematischen Querschnitt durch eine Dränmatte mit zwei Filterschichten und einer dazwischenliegenden Matte, wobei die Matte mit der einen Filterschicht und die Körner mit der Matte und der zweiten Filterschicht verbunden sind,
- Figur 5: die perspektivische Darstellung einer Matte, die in die erfindungsgemäße Dränmatte eingebaut werden kann,
- Figur 6: die Matte gemäß Figur 5 verbunden mit einem Spinnvlies als Filterschicht,
- Figur 7: den schematischen Querschnitt durch einen Deponieaufbau.

In Figur 1 ist schematisch der Querschnitt durch eine erfindungsgemäße Dränmatte dargestellt, welche aus zwei Filterschichten 1 und 2 und in Abstand durch Klebestellen 4 gehaltenen Körnern 3 dargestellt. Diese Matte kann in einfacher Weise nach den oben beschriebenen Verfahren hergestellt werden. Es ist aber auch möglich, die Körner mit einem Binder oder Kleber zu beschichten und dann über ein Lochblech, welches in einen Abstand von etwa 60% der Körnergröße über die untere Filterschicht gehalten wird, aufzurakeln. Nach Entfernen des Lochbleches kann die obere Filterschicht aufgelegt werden.

In Figur 2 ist schematisch im Querschnitt eine Dränmatte dargestellt, die aus zwei Filterschichten 5 und 6 besteht, welche Filterschichten 5 und 6 mit einer dazwischenliegenden Matte 8 an den Verbindungsstellen 9 verbunden sind. Sofern die Filterschichten 5, 6 wie auch die Matte 8 aus Fäden aus thermoplastischen Polymeren gebildet sind, können die Verbindungsstellen 9 durch Anschmelzen und Aneinanderpressen der zu verbindenden Teile erzeugt werden. Die Teile sind dann fest miteinander verschmolzen. Die in der dargestellten Dränmatte dargestellte Matte 8 weist in etwa würfelförmige Erhebungen (nach oben) und Vertiefungen auf, wobei in jeder würfelförmigen Vertiefung jeweils ein Korn 7 ortsfest gelagert ist.

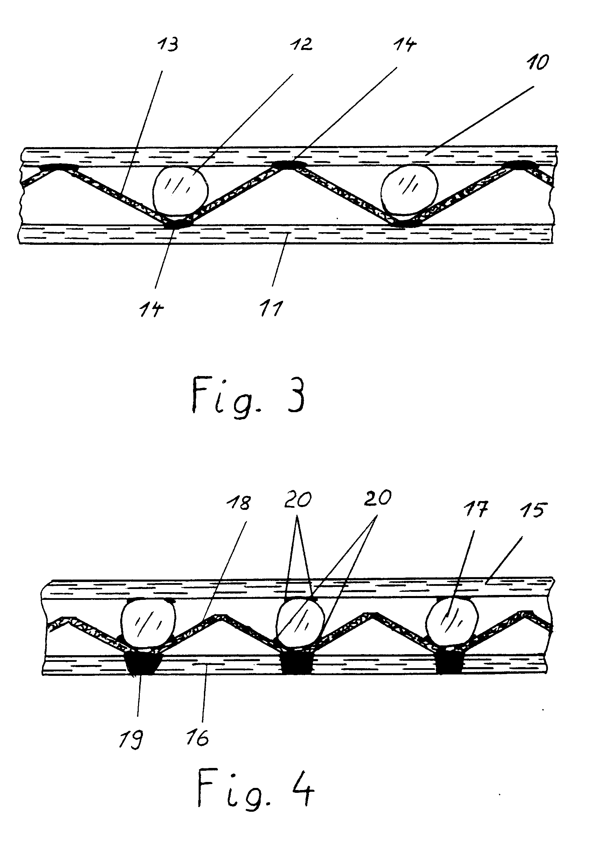

In den Figuren 3 und 4 weist die in der Dränmatte enthaltene Matte 13 bzw. 18 kegelförmige Erhebungen bzw. Vertiefungen auf, wobei jeweils ein Korn 12 bzw. 17 in jeder Vertiefung angeordnet ist.

Bei der in Figur 3 dargestellten Dränmatte sind jeweils die Spitzen der kegelförmigen Erhebungen mit der oberen Filterschicht 10, die der kegelförmigen Vertiefungen mit der unteren Filterschicht 11 über Klebestellen 14 verbunden. Hierdurch sind die Körner 12, die jeweils in die Vertiefungen der Matte 13 eingelegt sind, ortsfest fixiert.

In Figur 4 weist die Matte 18 einen Abstand zur oberen Filterschicht 15 auf. Die Matte 18 ist durch Verschweißen 19 mit der unteren Filterschicht 16, einem Spinnvlies, fest verbunden. Die Körner 17 sind in die Vertiefungen der Matte 18 eingelegt und durch die Klebestellen 20 mit der Matte 18 bzw. mit der oberen (zweiten) Filterschicht 15 verbunden. Eine daraus hergestellte Mattenbahn eignet sich besonders für den Deponiebau.

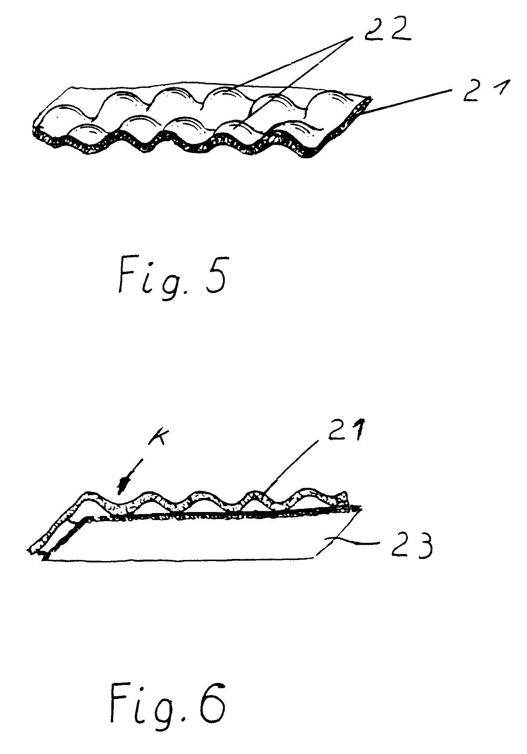

Zur Verdeutlichung dessen, wie die waffelähnlich strukturierte Oberfläche die in den erfindungsgemäßen Dränmatten vorgesehenen Matten aussehen können, ist eine derartige Matte 21 in Figur 5 dargestellt. Diese Matte 21 weist Erhebungen 22 und dazwischenliegende Vertiefungen auf. Im dargestellten Fall sind die Erhebungen 22 und somit auch die Vertiefungen halbkugelförmig ausgebildet. Diese Erhebungen bzw. Vertiefungen können aber auch die Form eines Kegels, eines Kegelstumpfes, einer Pyramide, eines Pyramidenstumpfes, eines Würfels oder andere denkbare Formen aufweisen. Wesentlich dabei ist, daß die Vertiefungen derart angeordnet sind, daß die Körner, wenn sie in diese eingelegt sind (siehe Pfeil K in Figur 6), voneinander in etwa gleichen Abstand aufweisen.

In Figur 6 ist die Matte gemäß Figur 5 noch einmal dargestellt. Die Matte 21 ist nunmehr mit einer Filterschicht 23 verbunden. Die Körner finden dann jeweils in Vertiefungen Platz (siehe Pfeil K).

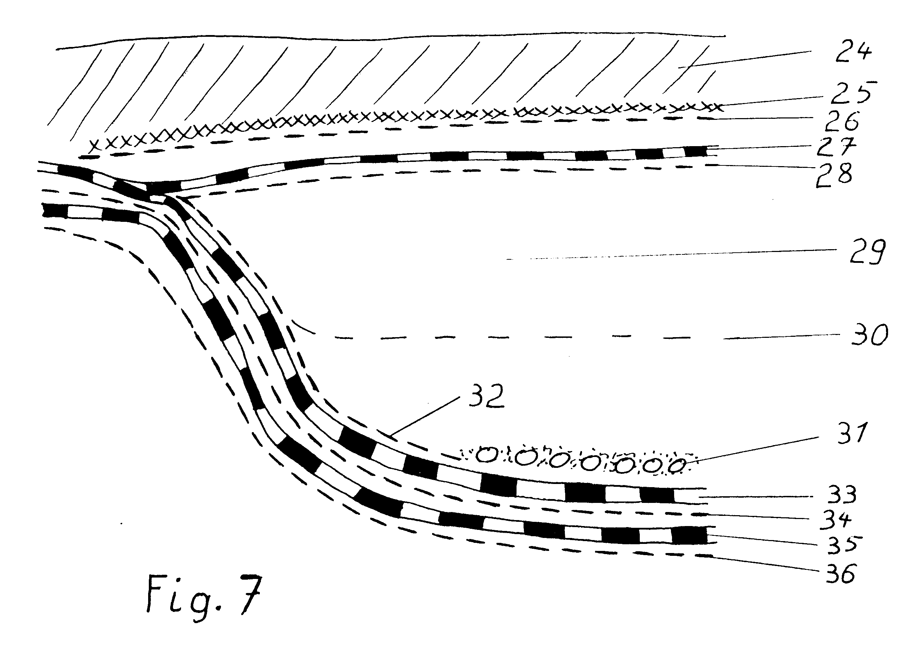

In Figur 7 ist schematisch der Aufbau einer Deponie dargestellt. Im einzelnen bedeuten:
- 24: Schüttung, die bis zu 2 m hoch sein kann,
- 25: Warnschicht
- 26: Kopfdrän- und Schutzschicht
- 27: Kopfdichtung
- 28: Kopfentgasungsschicht
- 29: Müllkörper
- 30: Müllkörperentgasungsschicht
- 31: Basisdränung
- 32: Böschungsdränung
- 33: obere Basisabdichtung
- 34: Leckage-Kontrollschicht
- 35: untere Basisabdichtung
- 36: Kapillarbrechende Schicht

Für die Schichten 30, 32, 34 und 36 ist die erfindungsgemäße Dränmatte besonders geeignet. Sie kann aber auch für die Schichten 26 und 28 verwendet werden.

## Patentansprüche

1. Dränmatte mit hoher Druckbeständigkeit, bestehend aus zwei Flächengebilden und zwischen diesen Flächengebilden ortsfest angeordneten Körnern, dadurch gekennzeichnet, daß die Körner (3, 7, 12, 17) einschichtig angeordnet sind und einen Abstand von wenigstens 50% der mittleren Korngröße voneinander aufweisen.

2. Dränmatte nach Anspruch 1, dadurch gekennzeichnet, daß sie ausschließlich Körner (3, 7, 12, 17) enthält, die durch Sieben mittels runde oder quadratische Öffnungen aufweisenden Siebböden derart klassiert sind, daß die Differenz zwischen der kleinsten und größten Korngröße maximal 3 mm beträgt.

3. Dränmatte nach Anspruch 2, dadurch gekennzeichnet, daß die Differenz der kleinsten und größten Korngröße maximal 2 mm beträgt.

4. Dränmatte nach einem oder mehreren der Ansprüche 1 bis 3, dadurch gekennzeichnet, daß zwischen den beiden Flächengebilden (5/6, 10/11, 15/16) eine dreidimensionale Matte (8, 13, 18) mit Positionierungsplätzen für die Körner angeordnet ist, wobei die Matte mit mindestens einem der Flächengebilde zumindest punktweise verbunden ist.

5. Dränmatte nach einem oder mehreren der Ansprüche 1 bis 4, dadurch gekennzeichnet, daß die dreidimensionale Matte (8, 13, 18) aus einer Vielzahl aus synthetischen Polymeren schmelzgesponnenen, sich stellenweise überkreuzenden und an den Kreuzungsstellen miteinander verschweißten Fäden mit einem Durchmesser von 0,2 bis 1,5 mm besteht, eine Dicke von 5 bis 70 mm aufweist, und eine waffelähnlich strukturierte Oberfläche mit Vertiefungen besitzt, wobei die Vertiefungen der strukturierten Oberfläche Positionierungsplätze für die Körner sind.

6. Dränmatte nach Anspruch 5, dadurch gekennzeichnet, daß die Matte (18) mit dem ersten Flächengebilde (16) verbunden ist und die Körner (17) mit dem ersten Flächengebilde und/oder der Matte (18) und mit dem zweiten Flächengebilde (15) verbunden sind, wobei die Körner (17) nur auf einer Seite der strukturierten Oberfläche der Matte angeordnet sind.

7. Dränmatte nach Anspruch 6, dadurch gekennzeichnet, daß die Dicke der Matte bei 60 bis 100 % der mittleren Korngröße liegt.

8. Dränmatte nach Anspruch 5, dadurch gekennzeichnet, daß die Matte (8, 13) mit beiden Flächengebilden (5/6, 10/11) verbunden ist und die Korngröße der Körner bei 80 bis 105 % der Dicke der Matte liegt.

9. Dränmatte nach einem oder mehreren der Ansprüche 1 bis 8, dadurch gekennzeichnet, daß als Körner Kies, Bims, Blähton oder Glas verwendet wird.

10. Dränmatte nach einem oder mehreren der Ansprüche 1 bis 9, dadurch gekennzeichnet, daß die Körner porös sind.

11. Depondieboden, welcher Dränmatten nach einem oder mehreren der Ansprüche 1 bis 10 als Basisdränageschicht, Leckagekontrollschicht und/oder kapillarbrechende Schicht enthält.

12. Deponieboden, bestehend aus drei übereinandergeschichteten Dränagematten nach einem oder mehreren der Ansprüche 1 bis 10, wobei außenliegende Flächengebilde als Filterschicht und innenliegende Flächengebilde als Abdichtungsbahn ausgebildet sind.

## Claims

1. Highly pressure-resistant drainage mat, comprising two flat shaped articles and grains disposed in a fixed manner between said flat shaped articles, characterized in that the grains (3, 7, 12, 17) are disposed in a single layer and are spaced apart from one another by at least 50% of the average grain size.

2. Drainage mat according to claim 1, characterized in that it contains exclusively grains (3, 7, 12, 17) which have been sized by screening using screen decks with round or square openings in such a manner that the difference between the smallest and the largest grain size is at most 3 mm.

3. Drainage mat according to claim 2, characterized in that the difference between the smallest and the largest grain size is at most 2 mm.

4. Drainage mat according to one or more of claims 1 to 3, characterized in that a three-dimensional mat (8, 13, 18) with positioning locations for the grains is disposed between the two flat shaped articles (5/6, 10/11, 15/16), the mat being connected at least at points to at least one of the flat shaped articles.

5. Drainage mat according to one or more of claims 1 to 4, characterized in that the three-dimensional mat (8, 13, 18) comprises a plurality of threads, 0.2 to 1.5 mm in diameter and melt-spun from synthetic polymers, which cross over one another at points and are welded together at the crossing points, is 5 to 70 mm thick and has a waffle-textured surface with depressions, the depressions of the textured surface being positioning locations for the grains.

6. Drainage mat according to claim 5, characterized in that the mat (18) is connected to the first flat shaped article (16) and the grains (17) are connected to the first flat shaped article and/or the mat (18) and to the second flat shaped article (15), with the grains (17) being disposed only on one side of the textured surface of the mat.

7. Drainage mat according to claim 6, characterized in that the thickness of the mat is around 60 to 100% of the average grain size.

8. Drainage mat according to claim 5, characterized in that the mat (8, 13) is connected to the two flat shaped articles (5/6, 10/11) and the size of the grains is around 80 to 105% of the thickness of the mat.

9. Drainage mat according to one or more of claims 1 to 8, characterized in that pebbles, pumice stone, light expanded clay aggregate or glass is used as grains.

10. Drainage mat according to one or more of claims 1 to 9, characterized in that the grains are porous.

11. Waste disposal site base, which contains drainage mats according to one or more of claims 1 to 10 as a basic drainage layer, leakage monitoring layer and/or capillary breaking layer.

12. Waste disposal site base, comprising three superimposed drainage mats according to one or more of claims 1 to 10, with outer-lying flat shaped articles taking the form of a filter layer and inner-lying flat shaped articles being designed as a sealing web.

## Revendications

1. Mat de drainage à grande résistance à la compression, constitué par deux nappes et par des grains disposés et immobilisés entre elles, caractérisé par le fait que les grains (3, 7, 12, 17) sont disposés en une seule couche et sont séparés les uns des autres par un intervalle d'au moins 50% de la grosseur de grain moyenne.

2. Mat de drainage selon revendication 1, caractérisé par le fait qu'il comporte exclusivement des grains (3, 7, 12, 17) qui, par tamisage au moyen de tamis à ouvertures rondes ou carrées, ont été classés de manière que la différence entre la plus petite et la plus grande grosseur de grain soit au maximum de 3 mm.

3. Mat de drainage selon revendication 2, caractérisé par le fait que la différence entre la plus petite et la plus grande grosseur de grain est au maximum de 2 mm.

4. Mat de drainage selon une ou plusieurs des revendications 1 à 3, caractérisé par l'agencement, entre les deux nappes (5/6, 10/11, 15/16), d'un mat tridimensionnel (8, 13, 18) présentant des emplacements pour le positionnement des grains, ce mat étant lié, au moins par points, à l'une des nappes.

5. Mat de drainage selon une ou plusieurs des revendications 1 à 4, caractérisé par le fait que le mat tridimensionnel (8, 13, 18) est constitué par un grand nombre de fils en polymère(s) synthétique(s) filés en fusion, lesquels se croisent de place en place, en des points de croisement où ils sont soudés entre eux, ces fils ayant un diamètre de 0,2 à 1,5 mm, et présente une épaisseur de 5 à 70 mm et une surface structurée similaire à une gaufrure, dotée de dépressions qui sont des emplacements pour le positionnement des grains

6. Mat de drainage selon revendication 5, caractérisé par le fait que le mat (18) est lié à la première nappe (1) et les grains (17) sont liés à la première nappe (1) et/ou au mat (18) et à la deuxième nappe (15), les grains (17) n'étant disposés que d'un seul côté de la surface structurée du mat.

7. Mat de drainage selon revendication 6, caractérisé par le fait que l'épaisseur du mat est de l'ordre de 60 à 100 % de la grosseur de grain moyenne.

8. Mat de drainage selon revendication 5, caractérisé par le fait que le mat (13) est lié aux deux nappes (5/6, 10/11) et la grosseur de grain est de l'ordre de 80 à 105 % de l'épaisseur du mat.

9. Mat de drainage selon une ou plusieurs des revendications 1 à 8, caractérisé par l'utilisation de gravier, pierre ponce, argile expansée ou verre, en tant que grains.

10. Mat de drainage selon une ou plusieurs des revendications 1 à 9, caractérisé par le fait que les grains sont poreux.

11. Garniture de sol ou fond de dépôt, comportant des mats de drainage selon une ou plusieurs des revendications 1 à 10, en tant que couche de drainage de base, couche de contrôle de fuite et/ou couche d'anticapillarité.

12. Garniture de sol ou fond de dépôt constituée par superposition de trois mats de drainage selon une ou plusieurs des revendications 1 à 10, la nappe située à l'extérieur étant réalisée en tant que couche filtrante, et la nappe située à l'intérieur étant réalisée en tant que couche d'étanchéité.
